# EUROPÄISCHE PATENTSCHRIFT

(11) **EP 0 854 172 B1**
(45) Veröffentlichungstag und Bekanntmachung des Hinweises auf die Patenterteilung: **04.08.2004**
(21) Anmeldenummer: 98100434.4
(22) Anmeldetag: 13.01.1998
(51) Int. Cl.: C08L 23/16, C08J 5/18

(54) **Thermoplastische Formmassen**
Thermoplastic molding compositions
Compositions thermoplastiques à mouler

(30) Priorität: 17.01.1997 DE 19701259
(43) Veröffentlichungstag der Anmeldung: 22.07.1998
(73) Patentinhaber: Lucobit AG, 50389 Wesseling (DE)
(72) Erfinder: Blümel, Thomas, Dr., 67167 Erpolzheim (DE)
(74) Vertreter: Bungartz, Klaus Dipl.-Ing.

(56) Entgegenhaltungen:
- EP-A- 0 223 019
- EP-A- 0 634 443
- WO-A-94/07954
- WO-A-95/09199
- DE-A- 3 319 844
- US-A- 5 593 747

## Beschreibung

Thermoplastische Formmassen, enthaltend, jeweils bezogen auf die Gesamtmasse der Formmasse,
a) mehr als 50 Gew.-% und bis zu 60 % eines annähernd linearen Copolymerisats von Ethylen mit einem oder mehreren α-Olefinen, welches Copolymerisat eine Dichte von 0,87 bis 0,92g/cm³, eine Molmassenverteilung M_{w}/Mₙ von 1,5 bis 4,0 und einen Schmelzindex (MFR 190/2,16) von 0,5 bis 12,0 g/10 min aufweist und welches mittels Metallocenkatalyse hergestellt ist.
b) 0 bis 45 Gew.-% eines Copolymerisats aus Ethylen und einem Vinylester einer C₂-C₄-Alkancarbonsäure und/oder einem C₁-C₄-Alkylester einer C₃-C₅-Alkencarbonsäure,
c) 0 bis 45 Gew.-% eines thermoplastischen Kautschuks,
d) 0 bis 45 Gew.-% Bitumen und
e) gewünschtenfalls weitere Zusätze,
mit der Maßgabe, daß die Summe der Komponenten b), c) und d) mindestens 5 Gew.-% der Gesamtmasse der Formmasse beträgt.

Weiterhin ist Gegenstand der Erfindung ein Verfahren zur Herstellung dieser thermoplastischen Formmassen, die Verwendung der thermoplastischen Formmassen zur Herstellung von Formkörpern, Folien und Dichtungsbahnen für Dächer, Tunnel, Deponien, Hochbau, Tiefbau und Straßenbau sowie Folien und Dichtungsbahnen, welche die thermoplastischen Formmassen enthalten.

Zur Herstellung von Dichtungsbahnen werden seit langem thermoplastischen Formmassen eingesetzt, welche Ethylencopolymerisate enthalten. Thermoplastische Formmassen auf Basis von Bitumen-Ethylenpolymerisatmischungen werden beispielsweise in DE-OS-33 19 844 beschrieben.

In EP-B1-0 428 851 werden bitumenfreie Kunststoffdichtungsbahnen beschrieben, welche Copolymere des Ethylens mit Comonomeren aus der Gruppe der Vinylester, der C₂-bis C₃-Alkancarbonsäuren und der C₁-bis C₄-Alkylestern der Acrylsäure enthalten. Diese Copolymere verbessern die Verarbeitung, insbesondere die Verschweißbarkeit der Dichtungsbahnen, lassen jedoch auf Grund der hydrolysierbaren und wärmeempfindlichen Comonomere hinsichtlich ihrer Witterungsbeständigkeit zu wünschen übrig.

In DE-C1-44 09 462 werden thermoplastische Formmassen beschrieben, die ebenfalls 10-50 Gew.-% Copolymerisat aus Ethylen mit einen Vinylester, einer C₂-C₄-Alkancarbonsäure und/oder einem C₁-C₄-Alkylester einer C₃-C₅-Alkencarbonsäure und daneben 10-40 Gew.-% eines Ethylencopolymerisats aus 97-85 Gew.-% Ethylen und 3-15 Gew.-% eines C₄-C₁₀ 1-Olefins enthalten, wobei das letztere Ethylencopolymerisat ein annähernd lineares Copolymerisat von Ethylen mit einem C₃-C₂₀-1-Olein mit besondere Eigenschaften darstellt, wie es durch Katalyse mittels Cyclopentadienylgruppenhaltiger Metallkomplexverbindungen erhalten werden kann. Durch den auf höchstens 40 Gew.-% begrenzten Anteil des speziellen linearen Ethylencopolymerisats enthalten die thermoplastischen Formmassen wiederum relativ hohe Anteile der hydrolyse- und wärmeempfindlichen Copolymerisate.

WO-A-9 509 199 beschreibt in Beispiel 2 einen Film aus 88% Copolymer von Ethylen mit α-Olefin (Exact 3027) und etwa 11.5% EVA. Exact 3027 hat eine Dichte von 0,90 g/cm³, einen Schmelzindex von 3,5g /10min und eine Molekulargewichtsverteilung von 2. Diese Copolymeren werden mit Metallocen Katalysatoren hergestellt, enthalten 0.2-20% α-olefin und sind linear.

EP-A-634443 beschreibt Filme aus Polyethylen. Der Gehalt an Polyethylen ist außerhalb des in der vorliegenden Anmeldung beanspruchten Bereichs.

Die Aufgabe der vorliegende Erfindung war es daher, die Nachteile des Standes der Technik zu überwinden und thermoplastische Formmassen bereitzustellen, die einerseits gut verarbeitbar, insbesondere verschweißbar sind und dabei andererseits gute Beständigkeit gegenüber Witterungseinflüssen und Temperaturbelastung aufweisen.

Demgemäß wurden die eingangs beschriebenen thermoplastischen Formmassen gefunden. Weiterhin wurde ein Verfahren zur Herstellung dieser thermoplastischen Formmassen, die Verwendung der thermoplastischen Formmassen zur Herstellung von Formkörpern, Folien und Dichtungsbahnen für Dächer, Tunnel, Deponien, Hochbau, Tiefbau und Straßenbau sowie Folien und Dichtungsbahnen, welche die thermoplastischen Formmassen enthalten, gefunden.

Durch den Anteil von mehr als 50 Gew.-% und bis zu 60 % an annähernd linearen Ethylencopolymerisats a) ist es möglich, den Anteil des hydrolyse- und wärmeempfindlichen Copolymerisats b) zu verringern bzw. ganz auf das Copolymerisat b) zu verzichten, ohne daß die Verarbeitbarkeit der Formmasse in erheblichem Ausmaß beeinträchtigt wird. Voraussetzung dafür ist, daß das Copolymerisat a) die genannten besonderen Eigenschaften aufweist. So muß die Dichte zwischen 0,87 und 0,92 liegen und beträgt vorzugsweise zwischen 0,90 und 0,92 g/cm³.

Die Molekulargewichtsverteilung, ausgedrückt durch das Verhältnis M_{w}/Mₙ muß einen Wert zwischen 1,5 und 4,0 aufweisen, vorzugsweise von 1,5 bis 2,5.

Der Schmelzindex (MFR 190/2,16, (Iso 1133)) muß einen Wert zwischen 0,5 und 12,0 g/10 min aufweisen, vorzugsweise von 1,0 bis 8,0.

Die Komponente b) stellt ein relativ polares Ethylen-Copolymerisat dar, welches vor allem die Aufgabe hat, die Verschweißbarkeit und Flexibilität der thermoplastischen Formmasse positiv zu beeinflussen. Als Komponente b) können alle hierzu übliche EthylenCopolymerisate eingesetzt werden. Geeignet sind z.B. Polymerisate mit den Comonomeren Methyl-, Ethyl-, Propyl- und Butylacrylat, wobei Butylacrylat bevorzugt ist. Als weitere Comonomere kommen Vinylacetat, Vinylpropionat und Vinylbutyrat in Betracht. Das Gewichtsverhältnis von Ethylen zu diesen Vinylestern beträgt vorzugsweise zwischen 70:30 und 90:10. Das Verhältnis von Ethylen zu den C₁-C₄-Alkylestern beträgt vorzugsweise zwischen 60:40 und 80:20. Auch Mischungen beider Arten von Copolymerisaten können als Komponente b) eingesetzt werden.

Der Gewichtsanteil der Komponente b) sollte in Abhängigkeit vom Gewichtsanteil der Komponente a) so gewählt werden, daß gerade eine ausreichende Flexibilität und Verschweißbarkeit der Formmasse erreicht wird. Vorzugsweise beträgt der Gewichtsanteil der Komponente b) an der Formmasse 0 bis 40 Gew.-%, besonders bevorzugt 0 bis 20 Gew.-%. Besonders witterungsbeständig und daher ganz besonders bevorzugt sind Formmassen mit einen Anteil der Komponente b) von weniger als 10 Gew.-%.

Als Alternative zur Komponente b) oder auch als Ergänzung können die thermoplastischen Formmassen auch 0-45 Gew.-% eines thermoplastischen Kautschuks enthalten.

Als thermoplastischer Kautschuk kann beispielsweise ein Kautschuk verwendet werden, der aus drei verschiedenen Blöcken des linearen A-B-A Typs aufgebaut ist. Diese A-B-A Struktur besteht aus Polystyrolendblöcken und einem elastomeren Mittelblock z.B. aus einem Copolymeren eines C₂-C₅-Alkens mit einem anderen C₂-C₅-Alken, vorzugsweise Ethylen/Butylen Copolymer. Diese Kautschukmassen besitzen sowohl elastomere als auch thermoplastische Eigenschaften und sind beispielsweise unter der Bezeichnung Kraton®G im Handel erhältlich. Weiterhin können die erfindungsgemäßen thermoplastischen Formmassen auch bis zu 45 Gew.-%, vorzugsweise 5-40 Gew.-% Bitumen enthalten. Das zugesetzte Bitumen weist üblicherweise eine Penetration von 15 bis 200 nach DIN 1995 auf.

Die annäherend linearen Copolymerisate a) werden, um die eingangs genannten Eigenschaften zu erfüllen, vorzugsweise mittels Metallocenkatalyse hergestellt. Die Polymerisation kann dabei z.B. in der Gasphase, in Suspension, Emulsion oder in Lösung erfolgen, wobei als Katalysatorsystem vorzugsweise ein solches verwendet wird, das
A) eine anorganischen oder organischen Träger,
B) einen Metallocenkomplex und
C) eine metalloceniumionenbildende Verbindung enthält

Als Trägermaterialien A werden vorzugsweise feinteilige Träger eingesetzt, die bevorzugt einen Teilchendurchmesser im Bereich von 1 bis 300 µm aufweisen, insbesondere von 30 bis 70 µm. Geeignete anorganische Träger sind beispielsweise Magnesiumchlorid oder Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace. Als organische Träger sind beispielsweise feinteilige Polyolefine geeignet, z.B. feinteiliges Polypropylen.

Die Menge an Träger beträgt vorzugsweise 50 bis 99,9 Gew.-%, bezogen auf die Gesamtmasse von Träger und Metallocenkomplex (Komponente B).

Als Metallocenkomplexe B) eignen sich besonders solche der allgemeinen Formel I 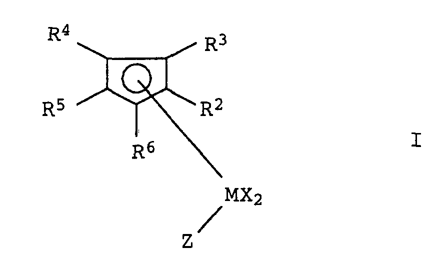 in der die Substituenten folgende Bedeutung haben:
- M: Titan, Zirkonium, Hafnium, Vanadium, Niob oder Tantal
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁷ oder -NR⁷R⁸,
wobei
- R⁷ und R⁸: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R² bis R⁶: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁹)₃ mit
- R⁹: C₁- bis C₁₀-Alkyl, C₃- bis C₁₀-Cycloalkyl oder C₆- bis C₁₅-Aryl,
- Z: für X oder 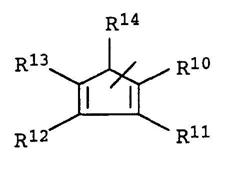 steht,
wobei die Reste
- R¹⁰ bis R¹⁴: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁵)₃ mit

- R¹⁵: C₁- bis C₁₀-Alkyl, C₆- bis C₁₅-Aryl oder C₃- bis C₁₀-Cycloalkyl,
oder wobei die Reste R⁵ und Z gemeinsam eine Gruppierung -R¹⁶-Abilden, in der
- R¹⁶ 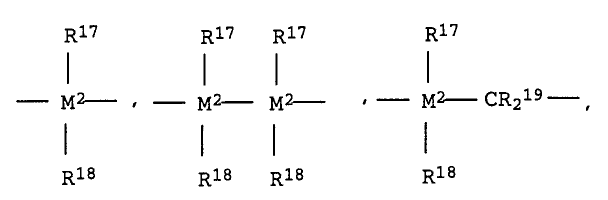 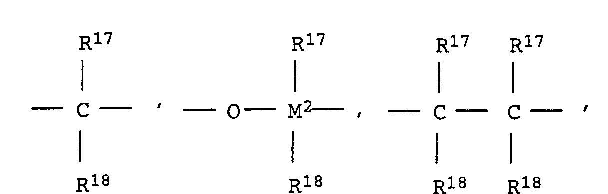 = BR¹⁷,= A1R¹⁷, -Ge-, -Sn-, -O-, -S-, = SO, = SO₂, = NR¹⁷, = CO, = PR¹⁷ oder = P(O)R¹⁷ ist,
wobei
- R¹⁷, R¹⁸ und R¹⁹: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A¹: 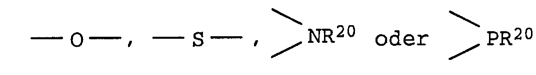 bedeuten, mit
- R²⁰: C₁- bis C₁₀-Alkyl, C₆- bis C₁₅-Aryl, C₃- bis C₁₀-Cycloalkyl, Alkylaryl oder Si(R²¹)₃,
- R²¹: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁵ und R¹³ gemeinsam eine Gruppierung -R¹⁶bilden.

Von den Metallocenkomplexen der allgemeinen Formel I sind 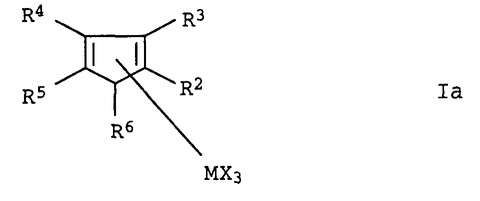 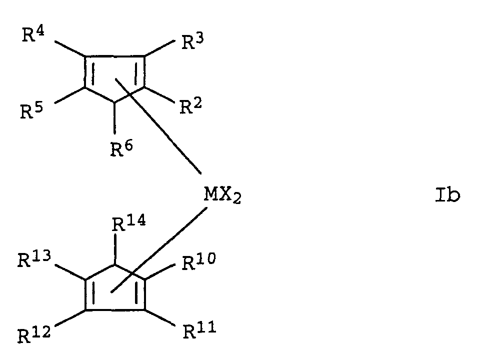 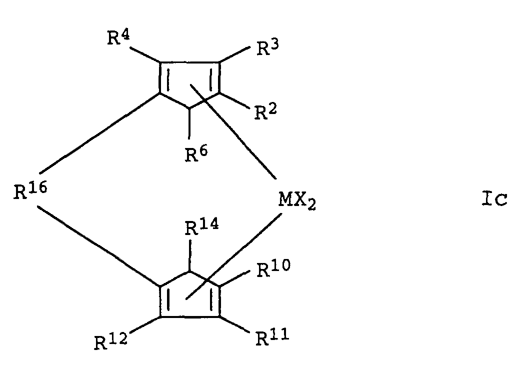 und 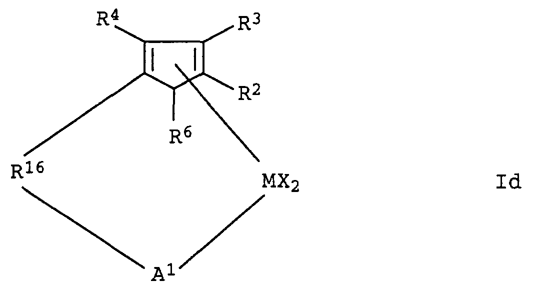 bevorzugt.

Besonders bevorzugt sind solche Übergangsmetallkomplexe, welche zwei miteinander verbrückte aromatische Ringsysteme als Liganden enthalten, also besonders die Übergangsmetallkomplexe der allgemeinen Formel Ic.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: Chlor, C₁-bis C₄-Alkyl oder Phenyl und
- R² bis R⁶: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für Chlor, C₁-bis C₄-Alkyl oder Phenyl,
- R² bis R⁶: Wasserstoff, C₁- bis C₄-Alkyl oder Si(R⁹)₃,
- R¹⁰ bis R¹⁴: Wasserstoff, C₁- bis C₄-Alkyl oder Si(R¹⁵)₃ bedeuten.

Insbesondere sind die Verbindungen der Formel Ib geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid sowie die entsprechenden Dimethylzirkoniumverbindungen.

Von den Verbindungen der Formel Ic sind diejenigen besonders geeignet, in denen
- R² und R¹⁰: gleich sind und für Wasserstoff oder C₁- bis C₁₀-Alkylgruppen stehen,
- R⁶ und R¹⁴: gleich sind und für Wasserstoff, eine Methyl-, Ethyl-, iso-Propyl- oder tert.-Butylgruppe stehen
- R³, R⁴, R¹¹ und R¹²: die Bedeutung R⁴ und R¹² C₁- bis C₄-Alkyl R³ und R¹¹ Wasserstoff haben oder zwei benachbarte Reste R³ und R⁴ sowie R¹¹ und R¹² gemeinsam für 4 bis 12 C-Atome aufweisende cyclische Gruppen stehen,
- R¹⁶: für 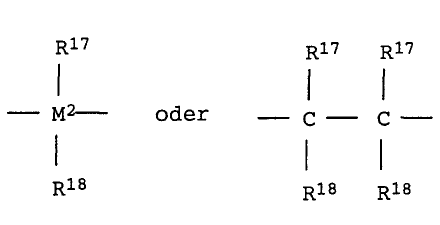 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Dimethylsilandiylbis(-2-methylindenyl)-hafniumdichlorid
   sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für Chlor, C₁-bis C₄-Alkyl oder Phenyl stehen.
- R¹⁶: für 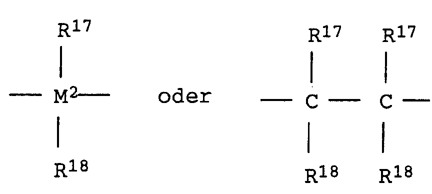 steht,
- A¹: für 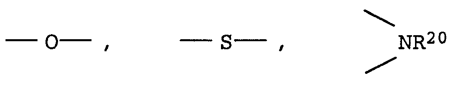 und
- R² bis R⁴ und R⁶: für Wasserstoff, C₁- bis C₁₀-Alkyl, C₃- bis C₁₀-Cycloalkyl, C₆- bis C₁₅-Aryl oder Si(R⁹)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Geeignete metalloceniumionen-bildende Verbindungen c) sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel II

M³X¹X²X³ II

bevorzugt, in der
- M³: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der X¹, X² und X³ gleich sind, vorzugsweise Tris(pentafluorphenyl)boran.

Als ionische Verbindungen mit lewissauren Kationen sind Verbindungen der allgemeinen Formel III

[(Y^{a+})Q₁Q₂ ... Q_{z}]^{d+} III

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Besonders geeignet als metalloceniumionen-bildende Verbindung sind offenkettige oder cyclische Alumoxanverbindungen der allgemeinen Formel IV oder V 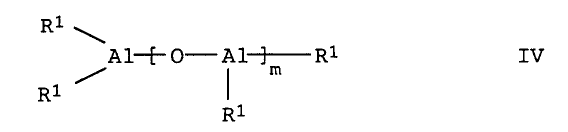 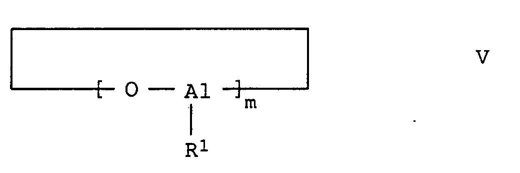 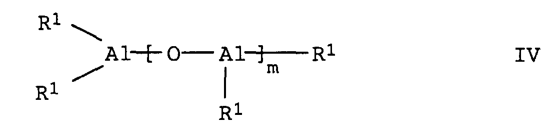 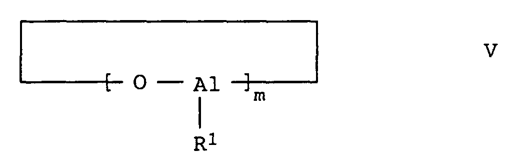
- wobei R¹: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch 5 mit anderen Metallalkylen, bevorzugt mit Aluminiumalkylen vorliegen.

Weiterhin können als metalloceniumionen-bildende Verbindungen Aryloxyalumoxane, wie in der US-A 5,391,793 beschrieben, Amino-0 aluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Die vorzugsweise mittels der genannte Katalysatorsysteme herstellbaren annähernd linearen Copolymerisate a) enthalten bevorzugt 97 bis 75 Gew.-% Ethylen- und 3 bis 25 Gew.-% C₃-C₂₀-α-Olefineinheiten, jeweils bezogen auf die Gesamtmasse der Komponente a). Besonders bevorzugt enthalten diese Copolymerisate 0 97 bis 85 Gew.-% Ethylen- und 3 bis 15 Gew.-% C₃-C₂₀-α-heit.

Als C₃-C₂₀-α-Olefine, die als Comonomere dieser Copolymere dienen, können alle geradkettigen oder verzweigten α-Isomere von Propen, Buten, Penten, Hexen, Hepten, Octen, Nonen, Decen, Undecen, Dodecen, Tridecen, Tetradecen, Pentadecen, Hexadecen, Heptadecen, Octadecen, Nonadecen und Eicosen eingesetzt werden. Bevorzugte C₃-C₂₀-α-Olefincomonomere sind solche aus der Gruppe Buten, Hexen, 2-methylpenten und Octen, besonders bevorzugt sind Buten und Hexen.

Neben den Komponenten a) bis d) können die erfindungsgemäßen thermoplastischen Formmassen gewünschtenfalls weitere Zusätze enthalten. Als derartige Zusätze kommen beispielsweise weichmachende mineralische Stoffe wie Talkum oder Kreide, Licht- und Wärmestabilisatoren sowie Pigmente in Betracht, wie sie in Polymer-Dichtungsbahnen üblich sind.

Als Stabilisatoren gegen Licht- und Witterungseinflüsse eigenen sich z.B. Derivate des 2,4-Dihydroxybenzophenons, Derivate des 2-Cyan-3,3-diphenylacrylates, Derivate des 2,2',4,4'-Tetrahydroxybenzophenons, Derivate des Orthohydroxyphenylbenztrialzols, Salicylsäureester, Orthohydroxyphenyl-S-triazine oder sterisch gehinderte Amine.

Als Pigmente können verschiedene Weiß- oder Farbpigmente eingesetzt werden. Vorteilhaft ist der Einsatz eines anorganischen Weißpigments. Durch das Weißpigment wird das thermoplastische Polymer optisch undurchlässig und zugleich aufgehellt. als Weißpigment kommt besonders Titandioxid in Betracht.

Als Farbpigmente kommen alle üblichen anorganischen und organischen Farbpigmente in Betracht. Als anorganische Pigmente sind besonders Chromoxide zu nennen.

Geeignete organische Pigmente sind beispielsweise solche aus der Klasse der Monoazopigmente (z.B. Produkte, die sich von Acetessigarylidderivaten oder von β-Naphtholderivaten ableiten), Monoazofarbstoffe und deren Metallsalze, wie β-stoffe, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phtahalocyaninpigmente oder basische Farbstoffe wie Triarylmethanfarbstoffe und deren Salze.

Vorteilhaft ist weiterhin der Einsatz handelsüblicher Pigmentpräparationen, wie sie zur Kunststoffeinfärbung verwendet werden. Besonders rote und grüne Pigmentpräparationen sind zur Einfärbung geeignet, beispielsweise die Pigmentzubereitungen Euthylen® (Hersteller BASF, Ludwigshafen).

Die erfindungsgemäßen thermoplastischen Formmassen lassen sich im allgemeinen durch einfaches Zusammenschmelzen der Komponenten bei erhöhten Temperaturen herstellen. Im Falle von bitumenhaltigen Formmassen empfiehlt es sich, das Bitumen in einen späteren Verfahrensschritt nach der Mischung der Polymerkomponenten und gewünschtenfalls der Pigmente zuzugeben.

Ein bevorzugtes Verfahren zur Herstellung von thermoplastischen Formmassen ist dadurch gekennzeichnet, daß man die Komponenten a) bis e) mittels Knetern, Rührwerken, Walzwerken und/oder Extrudern homogenisiert und bei Temperaturen von 120 bis 180°C zusammenschmilzt.

Die erfindungsgemäßen thermoplastischen Formmassen finden beispielsweise Verwendung zur Herstellung von Formkörpern, Folien und Dichtungsbahnen für Dächer, Tunnel, Deponien, Hochbau, Tiefbau und Straßenbau. Besonders bei der Verwendung in Folien und Dichtungsbahnen für Dächer und Deponien macht sich der Vorteil der erhöhten Beständigkeit gegenüber Witterungseinflüssen und Chemikalien bemerkbar.

### Beispiele

### Beispiel 1

In einem Brabender-Kneter wurden bei 170°C und mit ca. 10 Minuten Knetzeit folgende Anteile zu einer homogenen Mischung verarbeitet:
- 60 Gewichtsteile eines linearen Polyethylens mit einer Dichte von 0.903 g/cm³, einem Schmelzindex MFR 190°C/2.16 kg von 2.2 g/10 min und einem Butengehalt von 10 Gew.-% (Luflexen® HX, Hersteller: BASF AG)
- 40 Gewichtsteile eines Ethylenbutylacrylat-Copolymeren mit einem Butylacrylatgehalt von 18 Gew.-% und einem Schmelzindex gemessen nach 190/2.16 von 2 (Lucalen® A 2710 H, Hersteller: BASF AG)
- 2 Gewichtsteile Titandioxid und
- 0,5 Gewichtsteile der grünen Farbpigmentzubereitung Euthylen® -Grün (Hersteller: BASF AG)
- 0,5 Gewichtsteile eines Stabilisators aus der Gruppe der sterisch gehinderten Phenole (Irganox® 1010, Hersteller: Ciba Additives)

Die so erhaltene Mischung ist flexibel und läßt sich mit handelsüblichen Warmgas-Schweißgeräten hervorragend materialhomogen verschweißen.

## Patentansprüche

1. Thermoplastische Formmassen, enthaltend, jeweils bezogen auf die Gesamtmasse der Formmasse,
a) mehr als 50 Gew.-% und bis zu 60 Gew.-% eines annähernd linearen Copolymerisats von Ethylen mit einem oder mehreren α-Olefinen welches Copolymerisat eine Dichte von 0,87 bis 0,92 g/cm³, eine Molmassenverteilung Mw/Mn von 1,5 bis 4,0 und einen Schmelzindex (MFR 190/2,16) von 0,5 bis 12,0 g/10 min aufweist und welches mittels Metallocenkatalyse hergestellt ist.
b) 0 bis 45 Gew.-% eines Copolymerisats aus Ethylen und einem Vinylester einer C₂-C₄-Alkancarbonsaure und/oder einem C₁-C₄-Alkylester einer C₃-C₅-Alkencarbonsäure,
c) 0 bis 45 Gew.-% eines thermoplastischen Kautschuks,
d) 0 bis 45 Gew.-% Bitumen und
e) gewünschtenfalls weitere Zusätze,
mit der Maßgabe, daß die Summe der Komponenten b), c) und d) mindestens 5 Gew.-% der Gesamtmasse der Formmasse beträgt.

2. Thermoplastische Formmassen nach Anspruch 1, **dadurch gekennzeichnet, daß** der Gewichtsanteil der Komponente b) 0 bis 40 Gew.-% beträgt.

3. Thermoplastische Formmassen nach Anspruch 1 und 2, **dadurch gekennzeichnet, daß** der Gewichtsanteil der Komponente d) 5 bis 40 Gew.-% beträgt.

4. Thermoplastische Formmassen nach den Ansprüchen 1 bis 3, **dadurch gekennzeichnet, daß** die Komponente a) 97 bis 75 Gew.-% Ethylen- und 3 bis 25 Gew.-% C₃-C₂₀-α-Olefineinheiten, jeweils bezogen auf die Gesamtmasse der Komponente a), enthält.

5. Thermoplastische Formmassen nach den Ansprüchen 1 bis 4, **dadurch gekennzeichnet, daß** die Komponente a) 97 bis 85 Gew.-% Ethylen- und 3 bis 15 Gew.-% C₃-C₂₀-α-Olefineinheiten enthält.

6. Thermoplastische Formmassen nach den Ansprüchen 1 bis 5, **dadurch gekennzeichnet, daß** das C₃-C₂₀-α-Olefincomonomer der Komponente a) aus der Gruppe Buten, Hexen, 2-Methylpenten und Octen ausgewählt wird.

7. Verfahren zur Herstellung von Thermoplastischen Formmassen, gemäß den Ansprüchen 1 bis 6, **dadurch gekennzeichnet, daß** man die Komponenten a) bis e) mittels Knetern, Rührwerken, Walzwerken und/oder Extrudern homogenisiert und bei Temperaturen von 120 bis 180°C zusammenschmilzt.

8. Verwendung von thermoplastischen Formmassen gemäß den Ansprüchen 1 bis 6 zur Herstellung von Formkörpern, Folien und Dichtungsbahnen für Dächer, Tunnel, Deponien, Hochbau, Tiefbau und Straßenbau.

9. Folien und Dichtungsbahnen enthaltend thermoplastische Formmassen gemäß den Ansprüchen 1 bis 6.

## Claims

1. A thermoplastic molding material containing, based in each case on the total weight of the molding material,
a) more than 50% by weight and up tp 60% by weight of a virtually linear copolymer of ethylene with one or more α-olefins, which copolymer has a density of from 0.87 to 0.92 g/cm³, a molecular weight distribution M_{w}/Mₙ of from 1.5 to 4.0 and a melt flow rate (MFR 190/2.16) of from 0.5 to 12.0 g/10 min, and is prepared by means of metallocene catalysis,
b) from 0 to 45% by weight of a copolymer of ethylene and a vinyl ester of a C₂-C₄-alkanecarboxylic acid and/or a C₁-C₄-alkyl ester of a C₃-C₅-alkenecarboxylic acid,
c) from 0 to 45% by weight of a thermoplastic rubber,
d) from 0 to 45% by weight of bitumen and
e) if desired, further additives,
with the proviso that the sum of components b), c) and d) is at least 5% by weight of the total weight of the molding material.

2. A thermoplastic molding material as claimed in claim 1, wherein the amount of component b) is from 0 to 40% by weight.

3. A thermoplastic molding material as claimed in claim 1 or 2, wherein the amount of component d) is from 5 to 40% by weight.

4. A thermoplastic molding material as claimed in any of claims 1 to 3, wherein the component a) contains from 97 to 75% by weight of ethylene units and from 3 to 25% by weight of C₃-C₂₀-α-olefin units, based in each case on the total weight of component a).

5. A thermoplastic molding material as claimed in any of claims 1 to 4, wherein the component a) contains from 97 to 85% by weight of ethylene units and from 3 to 15% by weight of C₃-C₂₀-α-olefin units.

6. A thermoplastic molding material as claimed in any of claims 1 to 5, wherein the C₃-C₂₀-α-olefin comonomer of component a) is selected from the group consisting of butene, hexene, 2-methylpentene and octene.

7. A process for the preparation of a thermoplastic molding material as claimed in any of claims 1 to 6, wherein the components a) to e) are homogenized by means of kneaders, stirrers, roll mills or extruders and are melted together at from 120 to 180°C.

8. The use of a thermoplastic molding material as claimed in any of claims 1 to 6 for the production of moldings, films and sealing sheets for roofs, tunnels, landfills, building construction, civil engineering and road construction.

9. A film or sealing sheet containing a thermoplastic molding material as claimed in any of claims 1 to 6.

## Revendications

1. Matières à mouler thermoplastiques contenant, à chaque fois par rapport à la masse totale de la matière à mouler,
a) un copolymère qui est, pour l'essentiel, linéaire et constitué à partir de l'éthylène et d'une ou de plusieurs α-oléfines, à raison de plus de 50% en poids et jusqu'à 60% en poids, copolymère qui présente une masse volumique comprise entre 0,87 g/cm³ et 0,92 g/cm³, une polymolécularité Mₘ/Mₙ comprise entre 1,5 et 4,0 et un indice de viscosité (MFR 190/2,16) compris entre 0,5 g/10 min et 12,0 g/10 min, et que l'on a préparé au moyen d'une catalyse par métallocène,
b) un copolymère de l'éthylène et de l'ester vinylique de l'acide (alcane en C₂ à C₄)-carboxylique et/ou de l'ester alkylique en C₁ à C₄ de l'acide (alcène en C₃ à C₅)-carboxylique, à raison de 0 à 45% en poids,
c) un caoutchouc thermoplastique à raison de 0 à 45% en poids,
d) du bitume à raison de 0 à 45% en poids et
e) éventuellement d'autres adjuvants,
à condition que la somme des composants b), c) et d) corresponde au moins à 5% en poids de la masse totale de la matière à mouler.

2. Matières à mouler thermoplastiques selon la revendication 1, **caractérisées en ce que** la proportion pondérale du composant b) est comprise entre 0 et 40% en poids.

3. Matières à mouler thermoplastiques selon les revendications 1 et 2, **caractérisées en ce que** la proportion pondérale du composant d) est comprise entre 5% et 40% en poids.

4. Matières à mouler thermoplastiques selon les revendications 1 à 3, **caractérisées en ce que** le composant
a) contient des motifs éthylène, à raison de 97% à 75% en poids, et des motifs α-oléfines en C₃ à C₂₀, à raison de 3% à 25% en poids, à chaque fois par rapport à la masse totale du composant a).

5. Matières à mouler thermoplastiques selon les revendications 1 à 4, **caractérisées en ce que** le composant
a) contient des motifs éthylène, à raison de 97% à 85% en poids, et des motifs α-oléfines en C₃ à C₂₀, à raison de 3% à 15% en poids.

6. Matières à mouler thermoplastiques selon les revendications 1 à 5, **caractérisées en ce que** l'on choisit le comonomère α-oléfine en C₃ à C₂₀ du composant a) dans le groupe formé par le butène, l'hexène, le 2-méthylpentène et l'octène.

7. Procédé pour la préparation des matières à mouler thermoplastiques selon les revendications 1 à 6,
**caractérisé en ce que** l'on soumet à une homogénéisation, les composants a) à e), au moyen d'une malaxeuse, d'un agitateur, d'une machine à laminer et/ou d'une extrudeuse, suivie d'une fusion conjointe à une température comprise entre 120°C et 180°C.

8. Mise en oeuvre des matières à mouler thermoplastiques selon les revendications 1 à 6, pour la préparation de corps moulés, de feuilles et de bandes d'étanchéité destinées aux toits, aux tunnels, aux décharges, à la construction en surface, aux travaux publics et à la construction de routes.

9. Feuilles et bandes d'étanchéité contenant les matières à mouler thermoplastiques selon les revendications 1 à 6.
